# FASCICULE DE BREVET EUROPEEN

(11) **EP 1 539 584 B1**
(45) Date de publication et mention de la délivrance du brevet: **14.02.2007**
(21) Numéro de dépôt: 03755647.9
(22) Date de dépôt: 28.07.2003
(51) Int. Cl.: B65B 27/10, B65B 17/02, B65G 57/18, B65G 1/04

(54) **DISPOSITIF D' ENTRELACAGE ET MACHINE DE PALETTISATION EQUIPEE D' UN TEL DISPOSITIF**
VERFLECHTUNGSANLAGE UND MIT DERGLEICHER ANLAGE VERSEHENE PALETTISIERVORRICHTUNG
INTERLACING DEVICE FOR A PALLETISING MACHINE AND PALLETISING MACHINE EQUIPPED WITH ONE SUCH DEVICE

(30) Priorité: 06.08.2002 FR 0210029
(43) Date de publication de la demande: 15.06.2005
(73) Titulaire: PACK'INDUSTRIE S.A., 68170 Rixheim (FR)
(72) Inventeur: ROESCH, Yves, F-68740 Munchhouse (FR)
(74) Mandataire: Nithardt, Roland
(86) Numéro de dépôt international: PCT/FR2003/002381
(87) Numéro de publication internationale: WO 2004/014732

(56) Documents cités:
- EP-A- 1 008 526
- FR-A- 2 811 652
- US-A- 5 769 601

## Description

La présente invention concerne un dispositif d'entrelaçage pour machine de palettisation de produits allongés ainsi qu'une machine de palettisation équipée d'un tel dispositif, cette machine de palettisation comportant au moins un portique, un chariot monté mobile en translation verticale sur ledit portique et un dispositif de préhension monté mobile en translation horizontale sur ledit chariot et agencé pour prélever lesdits produits d'une rampe de stockage et les déposer sur une palette de transport.

Ce type de machine de palettisation est bien connu pour palettiser, de manière automatique ou semi-automatique, des produits allongés, par exemple des tubes cylindriques, directement et en continu à la sortie de leur ligne de fabrication. La palettisation des tubes est une opération délicate puisque, lorsqu'ils sont déposés côte à côte et en couches superposées, ils ont tendance à rouler les uns sur les autres. On remédie à cet inconvénient en effectuant un entrelaçage des rangées de tubes au moyen d'un lien, qui peut être une ficelle, un ruban, une tresse, une bande, une laize, un film ou tout autre moyen équivalent, en fibres, fils, matières naturelles et/ou synthétiques, ce lien étant tissé, non tissé, extrudé ou obtenu par tout autre moyen, ce lien ayant pour fonction de maintenir les rangées entre-elles et d'empêcher la chute des tubes avant le cerclage de la palette. Cet entrelaçage est habituellement réalisé manuellement par un opérateur qui doit déplacer la ou les bobines de lien d'un côté à l'autre de la palette en fonction de l'avancement des rangées. Si les tubes sont très longs, ceux-ci pouvant atteindre jusqu'à 10 mètres de longueur, le nombre de bobines d'entrelaçage doit être au moins doublé, ce qui mobilise plus d'un opérateur.

La publication WO 02/06121 du même titulaire décrit une machine de palettisation équipée d'un dispositif d'entrelaçage permettant d'entrelacer automatiquement les tubes au cours de leur palettisation. Ce dispositif d'entrelaçage comporte deux supports disposés de part et d'autre de la palette de transport et agencés pour recevoir alternativement une ou plusieurs bobines de lien d'entrelaçage. Ce dispositif comporte également des moyens de préhension embarqués sur le dispositif de préhension des tubes ou sur un dispositif de préhension additionnel et agencés pour déplacer la ou les bobines de lien d'entrelaçage d'un support à l'autre en fonction de l'avancement des rangées de tubes déposés sur la palette de transport. Ce dispositif d'entrelaçage étant solidaire de la machine de palettisation n'apporte pas une solution industrielle optimale. En effet, si les moyens de préhension sont embarqués sur le dispositif de préhension des tubes, il faut interrompre le cycle de palettisation pour déplacer la bobine de lien d'entrelaçage d'un support à l'autre, ce qui pénalise le rendement global de la machine de palettisation. Si les moyens de préhension sont embarqués sur un dispositif de préhension additionnel au dispositif de préhension des tubes, le dispositif d'entrelaçage devient complexe à réaliser, ce qui pénalise le coût global de la machine de palettisation.

La publication US-A-5,769,601 propose un dispositif d'entrelaçage intégré à une machine de palettisation dont le fonctionnement est inversé à celle objet de l'invention. Les tubes sont amenés en partie haute de la machine par un convoyeur et déposés sur une palette par des vérins pousseurs pour former une rangée. Après chaque rangée, la palette descend d'un niveau pour permettre la formation dune nouvelle rangée. Un dévidoir d'entrelaçage mobile en translation perpendiculairement auxdits tubes déroule une bande de papier ou de film plastique entre les rangées de tubes pour les maintenir. Ce dispositif d'entrelaçage n'est pas transposable à la machine de palettisation de l'invention et ne permet pas l'entrelaçage de tubes de grande longueur.

Le but de la présente invention est de pallier ces inconvénients en proposant un dispositif d'entrelaçage économique, pouvant fonctionner en temps masqué par rapport à la machine de palettisation pour ne pas pénaliser son rendement et pouvant convenir à toute longueur de tubes.

Ce but est atteint par un dispositif d'entrelaçage tel que défini en préambule et caractérisé en ce qu'il comporte au moins un portique d'entrelaçage destiné à s'étendre sensiblement parallèlement auxdits produits sur au moins une partie de leur longueur, ce portique d'entrelaçage comportant au moins un guide alimenté par au moins une bobine de lien d'entrelaçage, ledit dispositif d'entrelaçage comportant également des moyens d'entraînement couplés audit portique d'entrelaçage pour le déplacer alternativement entre au moins deux positions extrêmes de manière à déplacer ledit guide dans au moins un plan d'entrelaçage sensiblement perpendiculaire auxdits produits palettisés alternativement d'un côté à l'autre de ladite palette de transport.

Les moyens d'entraînement peuvent être agencés pour animer le portique d'entrelaçage d'au moins un mouvement de pivotement alternatif et/ou d'au moins un mouvement de translation alternative.

Les moyens d'entraînement peuvent être choisis parmi le groupe comprenant au moins les moteurs électriques, les vérins hydrauliques et pneumatiques. Selon les moyens d'entraînement choisis, ils peuvent également comporter au moins un système de transmission choisi parmi le groupe comprenant au moins les pignons et chaîne, les poulies et courroie.

Dans une forme de réalisation préférée, le dispositif d'entrelaçage comporte au moins un châssis intégrant des moyens de guidage en translation dudit portique d'entrelaçage, ces moyens de guidage pouvant comporter au moins un chemin de roulement ménagé dans le châssis pour recevoir des organes de roulement solidaires des montants verticaux dudit portique d'entrelaçage.

De manière avantageuse, le dispositif d'entrelaçage comporte au moins deux guides disposés sur le portique d'entrelaçage pour distribuer au moins deux liens d'entrelaçage dans au moins deux plans d'entrelaçage sensiblement parallèles et répartis sur la longueur desdits produits palettisés.

Selon une variante de réalisation, au moins un des guides est associé à des moyens d'actionnement agencés pour le déplacer en translation alternative le long dudit portique d'entrelaçage sur une distance prédéterminée pour déplacer ledit plan d'entrelaçage correspondant sensiblement parallèlement à lui-même, les moyens d'actionnement pouvant être choisis parmi le groupe comprenant au moins les moteurs électriques, les vérins hydrauliques et pneumatiques.

Ce but est également atteint par une machine de palettisation telle que définie en préambule et caractérisée en ce qu'elle comporte au moins un dispositif d'entrelaçage tel que défini ci-dessus.

Dans la forme de réalisation préférée, le dispositif d'entrelaçage comporte au moins un portique d'entrelaçage ayant des dimensions telles qu'il s'intègre à l'intérieur du portique de la machine de palettisation sous le dispositif de préhension et à l'extérieur de la palette de transport et des produits palettisés.

Ce dispositif de préhension comporte avantageusement des moyens d'asservissement de ses moyens d'entraînement associés aux moyens d'asservissement de ladite machine de palettisation pour déplacer ledit portique d'entrelaçage alternativement d'un côté à l'autre de ladite palette de transport sensiblement parallèlement aux plans d'entrelaçage en fonction de l'avancement de la dépose des produits sur ladite palette de transport et selon un dessin d'entrelaçage prédéfini.

Selon une variante de réalisation, au moins un des guides du dispositif d'entrelaçage est associé à des moyens d'actionnement agencés pour le déplacer en translation alternative le long dudit portique d'entrelaçage sur une distance prédéterminée de manière à déplacer ledit plan d'entrelaçage correspondant sensiblement parallèlement à lui-même.

Dans ce cas, les moyens d'asservissement sont agencés pour commander ces moyens d'actionnement de manière à entourer ledit lien d'entrelaçage autour des poteaux de ladite palette en fonction de l'avancement de la palettisation des produits et du dessin d'entrelaçage prédéfini.

La présente invention et ses avantages seront mieux compris dans la description suivante de différentes formes de réalisation données à titre d'exemple non limitatif et en référence aux dessins annexés, dans lesquels :
- la figure 1 est une vue de face de la machine de palettisation équipée d'un dispositif d'entrelaçage selon l'invention,
- la figure 2 est une vue de face du dispositif d'entrelaçage seul,
- la figure 3 est une vue de côté du dispositif d'entrelaçage de la figure 2 représenté dans ses deux positions extrêmes,
- les figures 4A et 4B sont des vues de côté de la machine de palettisation de la figure 1 respectivement dans les deux positions extrêmes du dispositif d'entrelaçage de la figure 3,
- la figure 5 illustre un exemple d'entrelaçage des tubes superposés en couches sur une palette,
- les figures 6 et 7 sont des vues de côté et de dessus d'une variante de réalisation du dispositif d'entrelaçage de l'invention, et
- la figure 8 est une vue de détail d'un guide-fil de la variante des figures 6 et 7.

En référence aux figures, le dispositif d'entrelaçage 10, 10' selon l'invention est destiné à équiper une machine de palettisation 1 de produits allongés, par exemple des tubes 2 cylindriques dont la longueur peut varier d'environ 1 à 10 mètres.

Cette machine de palettisation 1 est habituellement, mais non obligatoirement, disposée à la sortie d'une ligne de fabrication en continu de ces tubes 2 et permet leur palettisation automatique ou semi-automatique, selon un procédé continu ou discontinu. A cet effet, elle comporte un portique 3 sur lequel est monté un chariot 4 mobile en translation verticale. Au moins un dispositif de préhension 5 à griffes, à ventouses ou tout autre moyen adapté, est monté sur ce chariot 4 en translation horizontale et est agencé pour prélever les tubes 2 disposés côte à côte et parallèlement sur une rampe de stockage 6 inclinée et les déposer côte à côte et parallèlement sur au moins une palette de transport 7 ou tout autre support fixe ou mobile. Dans l'exemple représenté, le dispositif de préhension 5 est constitué par une poutre de préhension 5 s'étendant sur toute la longueur des tubes 2, cette poutre de préhension 5 étant équipée de systèmes à ventouse 5' pour porter les tubes 2 par aspiration. Egalement dans l'exemple représenté, la palette de transport 7 est portée par un chariot mobile 8 mais peut aussi être disposée entre des montants fixes et/ou amovibles.

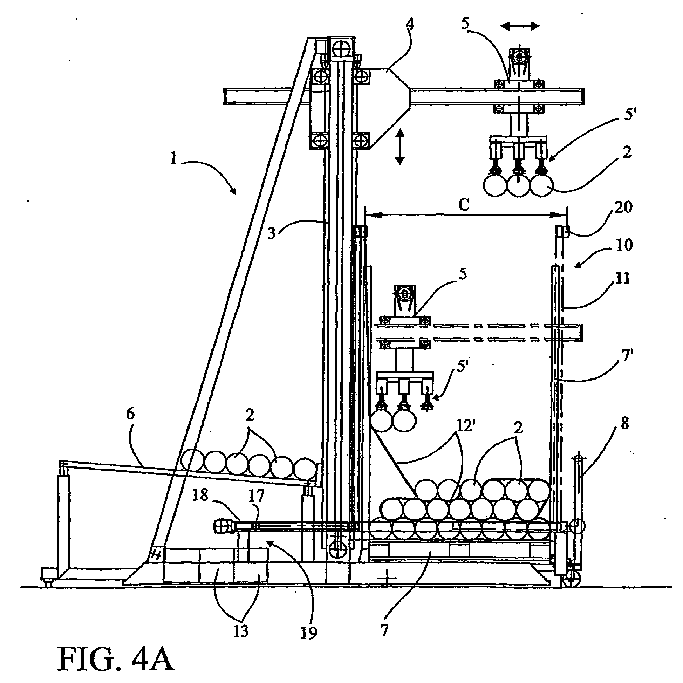

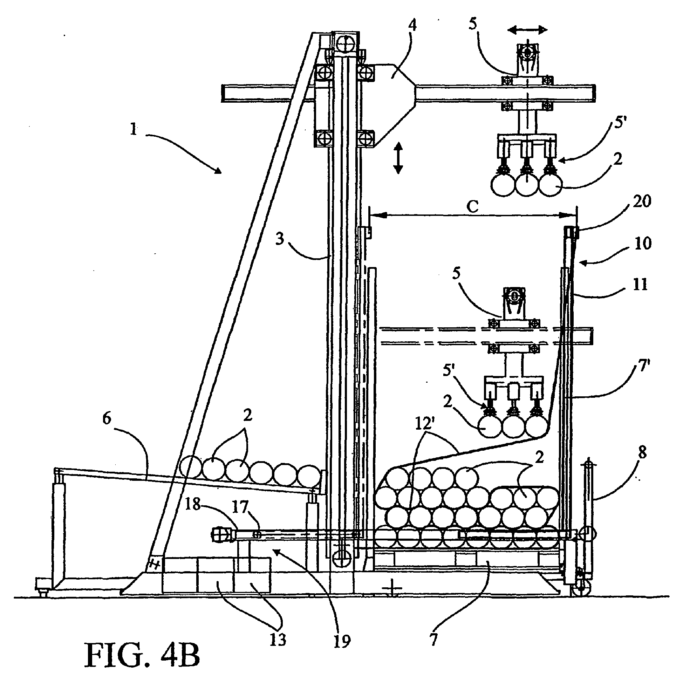

Le fonctionnement de cette machine de palettisation 1 en mode automatique est assuré par des moyens d'asservissement comportant avantageusement une unité informatique qui permet de gérer les différents déplacements du chariot 4 et de la poutre de préhension 5 pour obtenir une cinématique et un cycle de fonctionnement optimum. Ce cycle de fonctionnement est résumé comme suit en référence aux figures 4A et 4B :
1. déplacement de la poutre de préhension 5 du côté gauche du portique 3 et descente du chariot 4 pour prélever le ou les tubes 2 sur la rampe de stockage 6,
2. remontée du chariot 4 puis déplacement de la poutre de préhension 5 du côté droit du portique 3 plus ou moins selon l'avancement des rangées de tubes 2 posées sur la palette de transport 7,
3. descente du chariot 4 pour déposer le ou les tubes 2 sur la palette de transport 7 ou sur la dernière rangée de tubes 2 posée sur cette palette,
4. remontée du chariot 4 pour démarrer un nouveau cycle.

Un dispositif d'entrelaçage 10 est associé à la machine de palettisation 1 et agencé pour effectuer un entrelaçage automatique des rangées de tubes 2 sur la palette de transport 7 de manière à garantir le maintien des tubes les uns par rapport aux autres et des rangées les unes par rapport aux autres.

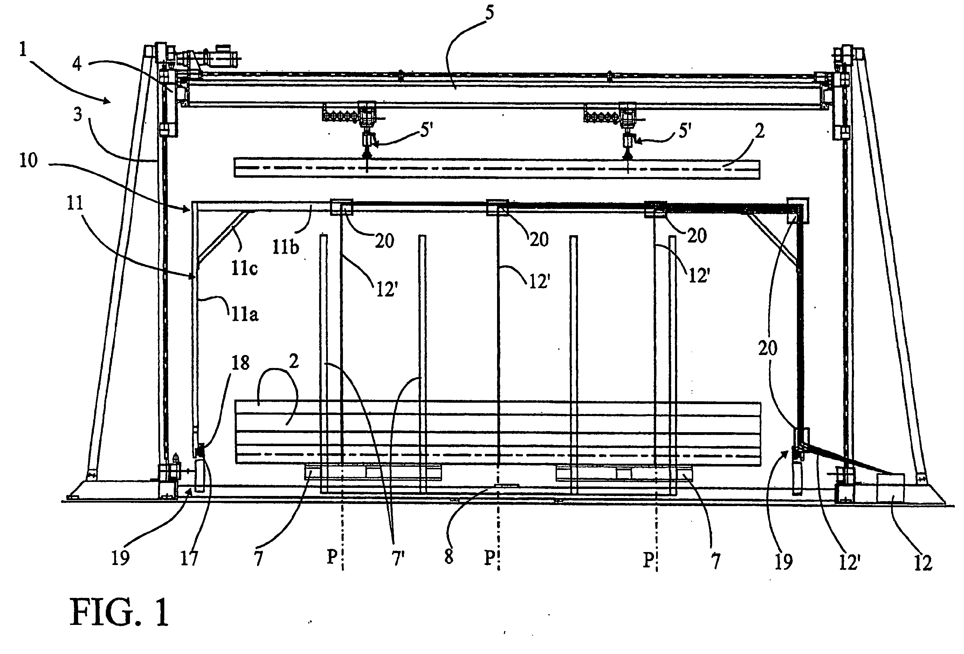

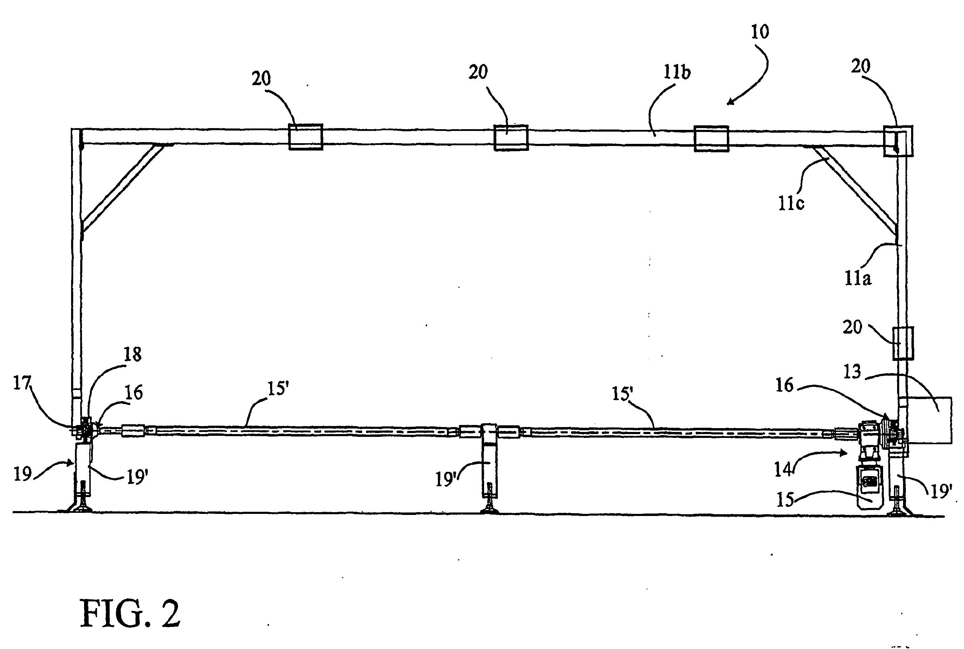

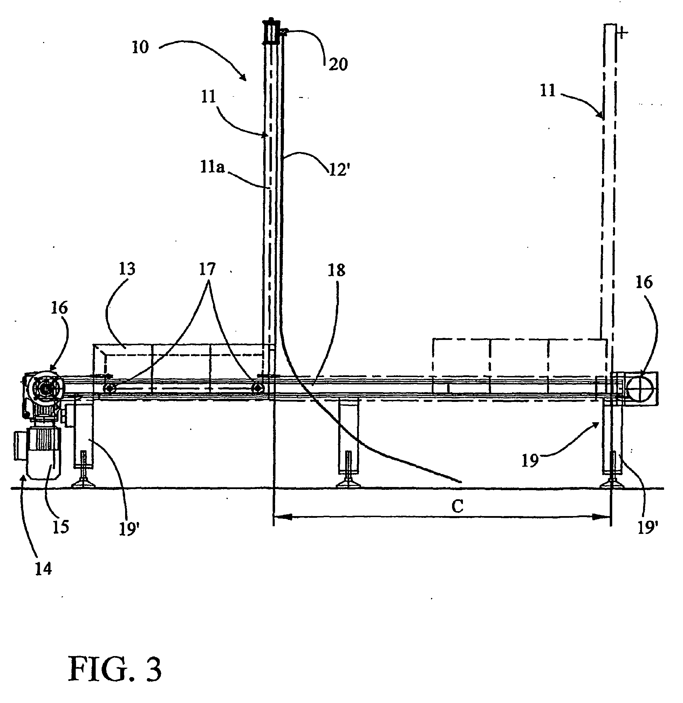

En référence aux figures 1 à 5, ce dispositif d'entrelaçage 10 comporte au moins un portique d'entrelaçage 11 s'étendant sensiblement parallèlement aux tubes 2 sur toute ou une partie de leur longueur et s'intégrant dans l'encombrement du portique 3 de la machine de palettisation 1. Notamment, le portique d'entrelaçage 11 doit pouvoir se déplacer à l'intérieur de la machine de palettisation 1 en dessous de la poutre de préhension 5 et perpendiculairement aux tubes 2 palettisés. Ce portique d'entrelaçage 11 est constitué notamment de deux montants 11a verticaux reliés en partie supérieure par un longeron 11b horizontal et deux potences 11c. S'il est formé d'une seule partie, il s'étend sur toute la longueur des tubes 2. Selon la longueur des tubes 2, il peut être scindé en deux parties dont chacune s'étend au plus sur la moitié des tubes 2. Ce portique d'entrelaçage 11 est alimenté d'un côté ou des deux côtés par une ou plusieurs bobines d'entrelaçage 12 disposées soit dans un boîtier porte-bobine 13 embarqué sur le portique d'entrelaçage 11 comme dans la figure 2, soit à terre comme dans la figure 1, soit sur un râtelier porte-bobine (non représenté) ou sur tout autre support équivalent mobile ou fixe.

Ce portique d'entrelaçage 11 est agencé pour être mobile alternativement au moins dans une direction sensiblement perpendiculaire aux tubes 2 entre au moins deux positions extrêmes situées sensiblement de part et d'autre de la palette de transport 7. Ce mouvement alternatif permet de dévider la ou les bobines 12 de lien d'entrelaçage 12' dans des plans d'entrelaçage P sensiblement parallèles entre eux et perpendiculaires auxdits tubes 2. Ce mouvement alternatif peut être un pivotement autour d'un point bas ou une translation selon une course C comme dans l'exemple représenté. Le dispositif d'entrelaçage 10 comporte, à cet effet, un mécanisme d'entraînement 14 constitué par exemple d'un moteur électrique 15 et d'un système de transmission par pignons et chaîne 16 ou par poulies et courroie ou par tout autre système équivalent. Le mécanisme d'entraînement 14 peut également être constitué par un système à vérin hydraulique ou pneumatique ou par tout mécanisme équivalent. Le portique d'entrelaçage 11 est guidé en translation par des moyens de guidage appropriés comprenant par exemple des organes de roulement 17, tels que des galets, circulant dans au moins un chemin de roulement 18 prévu dans un châssis 19, ou tout autre moyen équivalent. Les organes de roulement 17 sont prévus sur chaque montant 11a vertical du portique d'entrelaçage 11 pour assurer un bon guidage. Le châssis 19 est constitué, dans l'exemple représenté, de deux socles 19' allongés, sensiblement parallèles, réglables en hauteur par des pieds et répartis à chaque extrémité du portique d'entrelaçage 11 pour guider chaque montant vertical 11a. Un troisième socle 19' est prévu dans une zone médiane du portique d'entrelaçage 11 pour transmettre le mouvement d'entraînement du moteur électrique 15 de l'autre côté du portique d'entrelaçage 11 par une boîte de transmission et des axes de transmission, de manière à assurer également l'entraînement simultané des deux montants verticaux 11a du portique d'entrelaçage 11.

Le portique d'entrelaçage 11 comporte également des guides 20 pour guider et séparer les liens d'entrelaçage 12' en provenance des bobines 12. Selon le type de lien d'entrelaçage 12' (fil, bande, feuille, film), ces guides 20 sont adaptés. Dans l'exemple représenté, le lien d'entrelaçage 12' est un produit filaire et les guides 20 sont des guide-fils, ce terme étant utilisé pour la suite de la description. Ces guide-fils 20 peuvent être constitués par exemple de galets de détour, d'oeillets, de peignes et de tout autre guide-fil équivalent, utilisés seuls ou combinés. Ces guide-fils 20 peuvent être passifs ou actifs, c'est-à-dire animés d'un mouvement de rotation par exemple pour les galets de détour. Ils sont positionnés à plusieurs endroits comme par exemple sur les montants 11a à proximité de l'arrivée des liens d'entrelaçage 12', sur le longeron 11b à chaque départ d'un lien d'entrelaçage 12', dans l'angle du portique 11 pour orienter les liens d'entrelaçage 12', etc. et leur position est réglable. Les guide-fils 20 du longeron 11b sont positionnés dans les plans d'entrelaçage P définis pour chaque type et longueur de tubes 2. Pour des tubes 2 de petites longueurs, d'environ 1 à 3 mètres, l'entrelaçage est effectué dans les deux zones d'extrémité. Pour des tubes plus longs, l'entrelaçage doit être effectué dans les deux zones d'extrémité et dans une ou deux zones médianes comme dans l'exemple de la figure 1. De ce fait, le dispositif d'entrelaçage 10 doit être alimenté par un nombre de bobines 12 de lien d'entrelaçage équivalent au nombre de plans d'entrelaçage P. En fonction du nombre de bobines 12, le portique d'entrelaçage 11 peut être alimenté des deux côtés. Quand les bobines 12 sont vides, il faut les remplacer par des bobines 12 pleines. La fin des bobines 12 peut être repérée de différentes manières en tenant compte soit de son poids, soit de la longueur du lien d'entrelaçage 12'. Ces données sont introduites dans les moyens d'asservissement du dispositif d'entrelaçage 10 pour déclencher un signal visuel et/ou sonore de détection de fin de bobine pour avertir l'opérateur qu'il doit changer la bobine vide par une bobine pleine. La jonction entre la fin de la bobine 12 qui se termine et le début d'une nouvelle bobine 12 peut être réalisée manuellement ou automatiquement à l'aide d'une noueuse ou de tout autre dispositif équivalent.

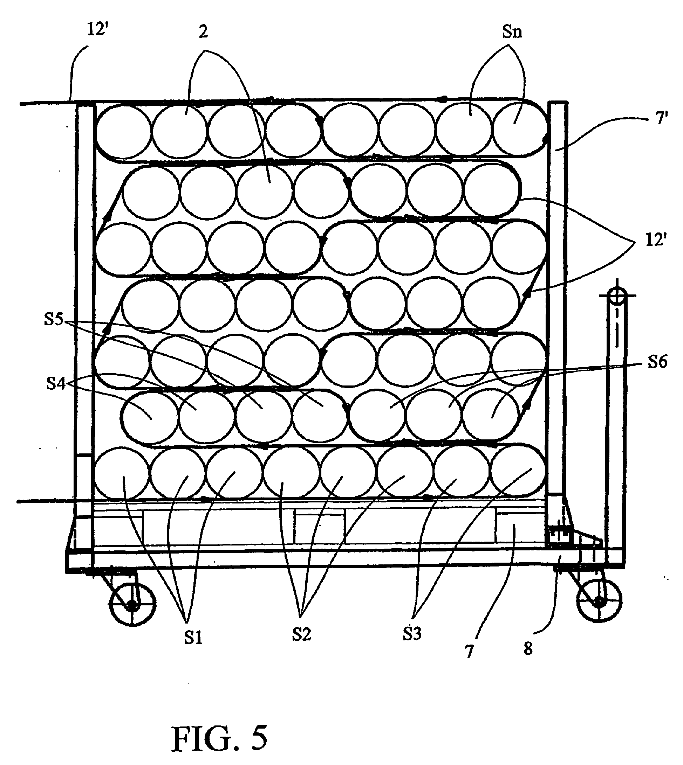

Le dispositif d'entrelaçage 10 comporte des moyens d'asservissement propres ou intégrés aux moyens d'asservissement de la machine de palettisation 1. Dans tous les cas, ces moyens d'asservissement sont dépendants du fonctionnement de la machine de palettisation 1 de manière à déplacer le portique d'entrelaçage 11 automatiquement et alternativement d'un côté à l'autre de la palette de transport 7 en fonction de l'avancement des rangées de tubes 2 déposées sur cette palette de transport 7 et selon un dessin d'entrelaçage prédéfini dont un exemple est illustré par la figure 5.

La réalisation de ce dessin d'entrelaçage est expliquée en référence aux figures 4A et 4B. Sur ces figures, le portique d'entrelaçage 11 est représenté dans ses deux positions extrêmes : sa position de départ en traits interrompus et sa position d'arrivée en trait plein. Sur ces figures également, la poutre de préhension 5 des tubes 2 est représentée dans deux positions : une position haute en trait plein et une position basse en traits interrompus. Cette poutre de préhension 5 comporte trois systèmes à ventouse 5' permettant de porter au maximum trois tubes 2.

Au départ d'un cycle de palettisation, le portique d'entrelaçage 11 est déplacé de la gauche vers la droite de la palette de transport 7 (cf. fig. 4B) pour déposer les liens d'entrelaçage 12' sur la palette 7 en laissant déborder leur extrémité pour pouvoir effectuer les noeuds en fin de palettisation. Une première rangée de huit tubes 2 est déposée sur la palette 7 en plaquant le lien d'entrelaçage 12' sur la palette de transport 7. Cette première rangée peut être formée par une première et une deuxième séries S1, S2 de trois tubes 2 puis une troisième série S3 de deux tubes 2 déposées côte à côte. Le portique d'entrelaçage 11 est déplacé de la droite vers la gauche de la palette de transport 7 (cf. fig. 4A) avant qu'une quatrième et qu'une cinquième séries S4, S5 de trois tubes 2 soient déposées côte à côte en quinconce sur la première rangée. Le portique d'entrelaçage 11 est ramené à droite de la palette de transport 7 avant qu'une sixième série S6 de trois tubes 2 soit déposée en quinconce à côté de la cinquième série S5 pour former la deuxième rangée de tubes 2. La formation des rangées de tubes 2 superposées combinée à l'insertion des liens d'entrelaçage 12' se poursuit ainsi de suite jusqu'à la hauteur voulue. Le nombre de rangées dépend bien entendu du poids et des dimensions des tubes 2. A la fin, quand la dernière série Sn de tubes 2 est déposée pour terminer le dernier rang, le portique d'entrelaçage 11 est ramenée à gauche de la palette de transport 7. L'opérateur coupe le lien d'entrelaçage 12' puis déplace le châssis mobile 8 pour mettre en place un autre châssis mobile 8 devant le portique 3 afin de démarrer un nouveau cycle de palettisation. L'utilisation d'un châssis mobile 8 permet de réduire l'interruption entre deux cycles de palettisation à quelques secondes pour éviter l'accumulation des tubes 2 au niveau de la rampe de stockage 6. L'opérateur peut ensuite terminer de nouer les extrémités du lien d'entrelaçage 12' de manière à pouvoir évacuer la palette de transport 7 de tubes 2 par un gerbeur ou tout autre moyen. Il est bien sûr possible d'automatiser l'évacuation du chariot mobile 8 plein et l'amenée d'un chariot mobile 8 vide.

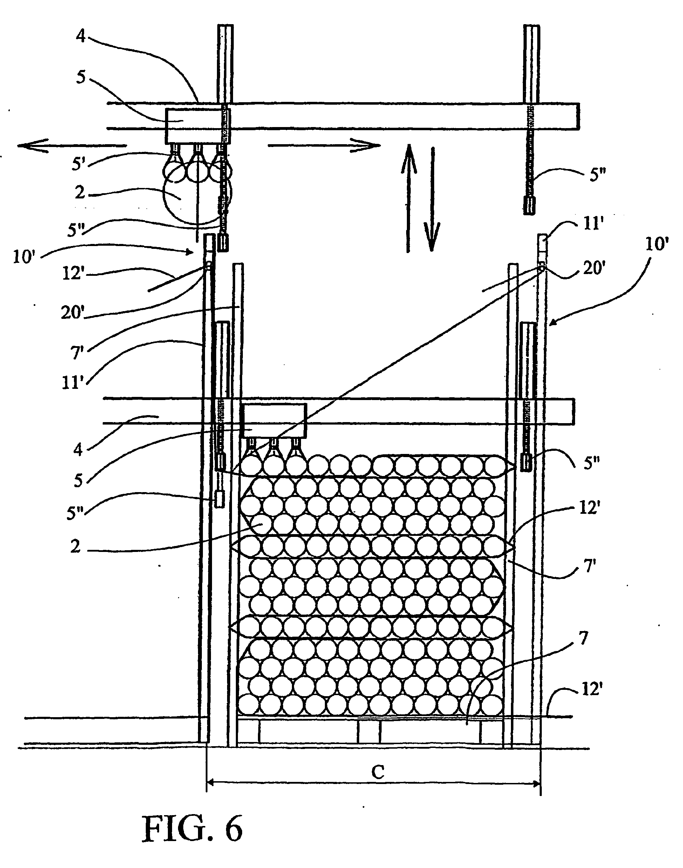

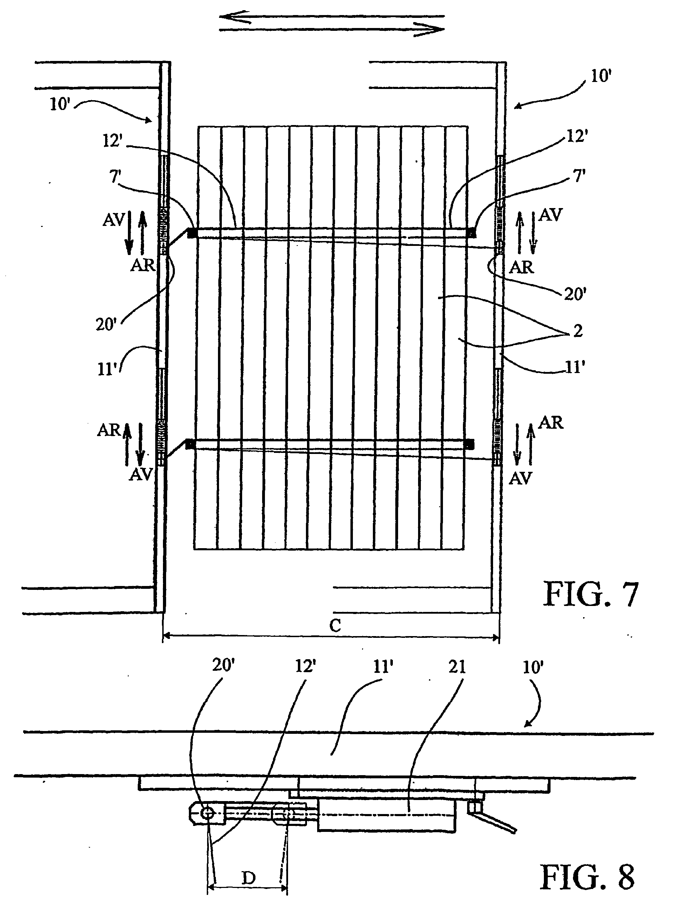

Dans certaines applications, l'entrelaçage peut être amélioré ou renforcé en entourant le lien d'entrelaçage 12' autour des poteaux 7' qui s'étendent verticalement par exemple des quatre coins de la palette 7. Les figures 6 à 8 illustrent une variante de réalisation du dispositif d'entrelaçage 10' qui permet de réaliser ce type d'entrelaçage spécifique. Les guide-fils 20' prévus sur le portique d'entrelaçage 11' sont associés à des moyens d'actionnement 21 agencés pour les déplacer en translation alternative AV/AR le long de ce portique d'entrelaçage 11' sur une course D prédéterminée. Les moyens d'actionnement 21 sont dans l'exemple représenté à la figure 8 constitués de vérins hydrauliques ou pneumatiques à double effet commandés par les moyens d'asservissement du dispositif d'entrelaçage 10' ou ceux de la machine de palettisation 1. Dans cette variante de réalisation, le chariot 1 portant le dispositif de préhension 5 comporte des pièces supplémentaires appelées des poussoirs 5" s'étendant verticalement et dont le rôle est d'abaisser le lien d'entrelaçage 12' le long des poteaux 7'. Ces poussoirs 5" peuvent être fixes ou animés d'un mouvement en translation alternative verticale par exemple au moyen de vérins.

Le fonctionnement de ce dispositif d'entrelaçage 10' est expliqué en référence aux figures 6 et 7. En fonction des tubes 2 à palettiser, de leur longueur et du dessin d'entrelaçage choisi, on choisit d'entourer les liens d'entrelaçage 12' autour des poteaux 7' pour solidariser les tubes 2 à la palette 7.

Au départ d'un cycle de palettisation, le portique d'entrelaçage 11' est déplacé de la droite vers la gauche de la palette de transport 7 de sa course C pour déposer les liens d'entrelaçage 12' sur la palette 7 en laissant déborder leur extrémité pour pouvoir effectuer les noeuds en fin de palettisation. Quatre rangées de tubes 2 sont déposées sur la palette 7 en quinconce par le dispositif de préhension 5. Le portique d'entrelaçage 11' est déplacé de la gauche vers la droite de la palette de transport 7 et les guide-fils 20' sont déplacés en translation AR avant qu'une série de six tubes 2 soit déposée. Le portique d'entrelaçage 11' est ramené à gauche de la palette de transport 7 et les guide-fils 20' sont déplacés en translation AV avant qu'une série six tubes 2 soit déposée à côté de la précédente pour former la cinquième rangée de tubes 2. Le portique d'entrelaçage 11' est déplacé à droite refermant la boucle de lien d'entrelaçage 12' formée autour des poteaux 7' en regard. Trois autres rangées de tubes 2 sont déposées en quinconce avant que le portique d'entrelaçage 11' ne se déplace vers la gauche et les guide-fils 20' se déplacent en translation AR pour former une nouvelle boucle autour des poteaux 7'. La formation des rangées de tubes 2 superposées combinée à l'insertion des liens d'entrelaçage 12' se poursuit ainsi de suite jusqu'à la hauteur voulue. Le nombre de rangées dépend bien entendu du poids et des dimensions des tubes 2. Pour terminer l'entrelaçage, l'opérateur noue les extrémités du lien d'entrelaçage 12'. Dans l'exemple de la figure 7, le lien d'entrelaçage 12' est entouré en boucle autour des poteaux 7' en regard. Il peut bien entendu être entouré selon un autre dessin et par exemple en "8".

Il ressort clairement de cette description que invention permet d'atteindre les buts fixés notamment de pouvoir effectuer un entrelaçage des rangées de tubes 2 au fur et à mesure de leur palettisation de façon automatique, optimale et économique. De plus, le dispositif d'entrelaçage 10 selon l'invention peut s'adapter à toute longueur de tubes 2 ainsi qu'à toute machine de palettisation 1 automatique existante fonctionnant sur le même principe.

Bien entendu, la présente invention n'est pas limitée aux exemples de réalisation décrits mais s'étend à toute modification et variante conformes à l'objet défini par les revendications.

## Revendications

1. Dispositif d'entrelaçage (10,10) pour machine de palettisation (1) de produits (2) allongés destinés à être déposés en rangs superposés sur au moins une palette de transport (7), **caractérisé en ce qu'**il comporte au moins un portique d'entrelaçage (11, 11') destiné à s'étendre sensiblement parallèlement auxdits produits (2) sur au moins une partie de leur longueur, ce portique d'entrelaçage (11, 11') comportant au moins un guide (20, 20') alimenté par au moins une bobine (12) de lien d'entrelaçage (12'), ledit dispositif d'entrelaçage (10, 10') comportant également des moyens d'entraînement (14) couplés audit portique d'entrelaçage (11, 11') et agencés pour le déplacer alternativement entre au moins deux positions extrêmes de manière à déplacer le guide (20, 20') dans au moins un plan d'entrelaçage (P) sensiblement perpendiculaire auxdits produits (2) palettisés alternativement d'un côté à l'autre de ladite palette de transport (7).

2. Dispositif d'entrelaçage selon la revendication 1, **caractérisé en ce que** les moyens d'entraînement sont agencés pour animer ledit portique d'entrelaçage (11, 11') d'au moins un mouvement de pivotement alternatif.

3. Dispositif d'entrelaçage selon la revendication 1, **caractérisé en ce que** les moyens d'entraînement (14) sont agencés pour animer ledit portique d'entrelaçage (11, 11) d'au moins un mouvement de translation alternative.

4. Dispositif d'entrelaçage selon la revendication 1, **caractérisé en ce que** les moyens d'entraînement (14) sont choisis parmi le groupe comprenant au moins les moteurs électriques (15), les vérins hydrauliques et pneumatiques.

5. Dispositif d'entrelaçage selon la revendication 4, **caractérisé en ce que** les moyens d'entraînement (14) comportent au moins un système de transmission choisi parmi le groupe comprenant au moins les pignons et chaîne (16), les poulies et courroie.

6. Dispositif d'entrelaçage selon la revendication 3, **caractérisé en ce qu'**il comporte au moins un châssis (19) pourvu de moyens de guidage en translation dudit portique d'entrelaçage (11,11').

7. Dispositif d'entrelaçage selon la revendication 6, **caractérisé en ce que** les moyens de guidage comportent au moins un chemin de roulement (18) ménagé dans ledit châssis (19) pour recevoir des organes de roulement (17) solidaires des montants (11a) verticaux dudit portique d'entrelaçage (11, 11).

8. Dispositif d'entrelaçage selon la revendication 1, **caractérisé en ce qu'**il comporte au moins deux guides (20,20') disposés sur ledit portique d'entrelaçage (11,11') pour distribuer au moins deux liens d'entrelaçage (12') dans au moins deux plans d'entrelaçage (P) sensiblement parallèles et répartis sur la longueur desdits produits (2) palettisés.

9. Dispositif d'entrelaçage selon la revendication 8, **caractérisé en ce qu'**au moins un des guides (20') est associé à des moyens d'actionnement (21) agencés pour le déplacer en translation alternative le long dudit portique d'entrelaçage (11') sur une distance prédéterminée (D) pour déplacer le plan d'entrelaçage (P) sensiblement parallèlement à lui-même.

10. Dispositif d'entrelaçage selon la revendication 9, **caractérisé en ce que** les moyens d'actionnement (21) sont choisis parmi le groupe comprenant au moins les moteurs électriques, les vérins hydrauliques et pneumatiques.

11. Machine de palettisation (1) de produits cylindriques allongés (2), comportant au moins un portique (3), un chariot (4) monté mobile en translation verticale sur ledit portique (3), au moins un dispositif de préhension (5) monté mobile en translation horizontale sur ledit chariot (4) et agencé pour prélever lesdits produits (2) d'une rampe de stockage (6) et les déposer sur une palette de transport (7), **caractérisée en ce qu'**elle comporte au moins un dispositif d'entrelaçage (10, 10') selon l'une quelconque des revendications précédentes.

12. Machine de palettisation selon la revendication 11, **caractérisée en ce que** ledit dispositif d'entrelaçage (10, 10') comporte au moins un portique d'entrelaçage (11, 11) ayant des dimensions telles qu'il s'intègre à l'intérieur du portique (3) de la machine de palettisation (1) sous ledit dispositif de préhension (5) et à l'extérieur de ladite palette de transport (7) et desdits produits (2) palettisés.

13. Machine de palettisation selon la revendication 11, **caractérisée en ce que** ledit dispositif de préhension (10, 10) comporte des moyens d'asservissement de ses moyens d'entraînement associés auxdits moyens d'asservissement de ladite machine de palettisation (1) pour déplacer ledit portique d'entrelaçage (11, 11) alternativement d'un côté à l'autre de ladite palette de transport (7) sensiblement parallèlement aux plans d'entrelaçage (P) en fonction de l'avancement de la palettisation des produits (2) déposés sur ladite palette de transport (7) et selon un dessin d'entrelaçage prédéfini.

14. Machine de palettisation selon la revendication 11, **caractérisée en ce qu'**au moins un des guides (20') du dispositif d'entrelaçage (10') est associé à des moyens d'actionnement (21) agencés pour le déplacer en translation alternative le long dudit portique d'entrelaçage (11) sur une distance prédéterminée (D) de manière à déplacer ledit plan d'entrelaçage (P) correspondant sensiblement parallèlement à lui-même.

15. Machine de palettisation selon les revendications 13 et 14, **caractérisée en ce que** les moyens d'asservissement sont agencés pour commander lesdits moyens d'actionnement (21) dudit guide (20) de manière à entourer ledit lien d'entrelaçage (12) autour des poteaux (7) de ladite palette de transport (7) en fonction de l'avancement de la palettisation des produits (2) et du dessin d'entrelaçage prédéfini.

## Claims

1. An interlacing device (10, 10') for a machine (1) which palletizes elongated products (2) that are designed to be deposited in superimposed rows on at least one transport pallet (7), **characterized in that** it comprises at least one interlacing gantry (11, 11') extending generally parallel to and along at least a portion of the length of said products (2), said interlacing gantry (11, 11') comprising at least one guide (20, 20') supplied by at least one spool (12) of interlacing material (12'), said interlacing device (10, 10') also comprising drive means (14) connected to said interlacing gantry (11, 11') for displacing it between at least two alternate end positions so as to displace the guide (20, 20') in at least one interlacing plane (P) that is essentially perpendicular to said palletized products (2) alternately from one side to the other of said transport pallet (7).

2. An interlacing device according to claim 1 **characterized in that** the drive means cause at least said interlacing gantry (11, 11') to pivot alternately.

3. An interlacing device according to claim 1 **characterized in that** the drive means (14) cause at least said interlacing gantry (11, 11') to move in alternate translation.

4. An interlacing device according to claim 1 **characterized in that** the drive means (14) are selected from the group comprising at least electric motors (15), hydraulic and pneumatic cylinders.

5. An interlacing device according to claim 4 **characterized in that** the drive means (14) comprise at least one transmission system selected from the group comprising at least pinions and chain (16), pulley and belt.

6. An interlacing device according to claim 3 **characterized in that** it comprises at least one chassis (19) equipped with guide means for moving said interlacing gantry (11, 11') translationally.

7. An interlacing device according to claim 6 **characterized in that** the guide means comprises at least one pathway (18) formed in said chassis (19) to receive rollers (17) integral with vertical posts (11a) on said interlacing gantry (11, 11').

8. An interlacing gantry according to claim 1 **characterized in that** it comprises at least two guides (20, 20') located on said interlacing gantry (11, 11') to distribute at least two interlacing ties (12') in at least two essentially parallel interlacing planes (P) distributed along said palletized products (2).

9. An interlacing gantry according to claim 8 **characterized in that** it least one of the guides (20') is associated with activating means (21) which displace it in alternate translation along said interlacing gantry (11') for a predetermined distance (D) to displace the interlacing plane (P) essentially parallel to itself.

10. An interlacing device according to claim 9 **characterized in that** the activating means (21) are selected from the group comprising at least electric motors, hydraulic and pneumatic cylinders.

11. A palletizing machine (1) for elongated cylindrical products (2) comprising at least one gantry (3), one carrier (4) attached so that it moves in vertical translation along said gantry (3), at least one gripping device (5) attached so that it moves in horizontal translation on said carrier (4) and designed to remove said products (2) from a storage ramp (6) and deposit them on a transport pallet (7), **characterized in that** it comprises at least one interlacing device (10, 10') according to any one of the preceding claims.

12. A palletizing machine according to claim 11 **characterized in that** said interlacing device (10, 10') comprises at least one interlacing gantry (11, 11') having dimensions that permit it to be integrated within the gantry (3) of the palletizing machine (1) below said gripping device (5) and outside said transport pallet (7) and said palletized products (2).

13. A palletizing machine according to claim 11 **characterized in that** said gripping device (10, 10') comprises means for controlling its drive means associated with said drive means for the palletizing machine (1) in order to displace said interlacing gantry (11, 11') alternately from one side of the transport pallet (7) to the other essentially parallel to the interlacing planes (P) as the palletizing of the products (2) deposited on said transport pallet (7) progresses and according to a predetermined interlacing pattern.

14. A palletizing machine according to claim 11 **characterized in that** at least one of the guides (20') on the interlacing device (10') is associated with activating means (21) designed to displace it in alternate translation along said interlacing gantry (11') for a predetermined distance (D) so as to displace said corresponding interlacing plane (P) essentially parallel to itself.

15. A palletizing machine according to claims 13 and 14 **characterized in that** the control means are designed to control said means (21) for activating said guide (20') so as to wrap said interlacing material (12') around the posts (7') on said transport pallet (7) as palletization of the products (2) progresses and in a predetermined interlacing pattern.

## Patentansprüche

1. Verflechtungsanlage (10,10') für eine Maschine (1) zur Palettierung länglicher Produkte (2), die zur Ablage in übereinanderliegender Anordnung auf mindestens einer Transportpalette (7) vorgesehen sind, **dadurch gekennzeichnet, dass** sie mindestens einen Verflechtungsportalrahmen (11,11') aufweist, der dazu bestimmt ist, sich praktisch parallel zu den Produkten (2) über mindestens einen Teil ihrer Länge zu erstrecken, wobei der Verflechtungsportalrahmen (11,11') mindestens eine Führung (20,20') aufweist, die durch mindestens eine Spule (12) mit Verflechtungsband (12') beschickt wird, wobei die besagte Verflechtungsanlage (10,10') ebenfalls Antriebseinrichtungen (14) aufweist, die mit dem Verflechtungsportalrahmen (11,11') verbunden und dafür vorgesehen sind, ihn alternativ zwischen mindestens zwei Endpositionen so zu verlagern, dass die Führung (20,20') auf mindestens einer Verflechtungsebene (P) praktisch senkrecht zu den palettierten Produkten (2) alternativ von einer auf die andere Seite der Transportpalette (7) verlagert wird.

2. Verflechtungsanlage nach Anspruch 1, **dadurch gekennzeichnet, dass** die Antriebseinrichtungen dafür vorgesehen sind, den Verflechtungsportalrahmen (11,11') zu mindestens einer alternativen Schwenkbewegung zu veranlassen.

3. Verflechtungsanlage nach Anspruch 1, **dadurch gekennzeichnet, dass** die Antriebseinrichtungen (14) angeordnet sind, um den Verschachtelungsportalrahmen (11,11') zu mindestens einer alternativen Translationsbewegung zu animieren.

4. Verflechtungsanlage nach Anspruch 1, **dadurch gekennzeichnet, dass** die Antriebseinrichtungen (14) aus der Gruppe ausgewählt sind, die mindestens die Elektromotoren (15), die Hydraulik- und Pneumatikzylinder umfasst.

5. Verflechtungsanlage nach Anspruch 4, **dadurch gekennzeichnet, dass** die Antriebseinrichtungen (14) mindestens ein Übertragungssystem umfassen, welches aus der Gruppe ausgewählt ist, die mindestens die Zahnritzel und Ketten (16), die Seilrollen und Riemen umfasst.

6. Verflechtungsanlage nach Anspruch 3, **dadurch gekennzeichnet, dass** sie mindestens ein Gestell (19) aufweist, welches mit Einrichtungen zur Führung des Verflechtungsportalrahmens (11,11') in Form einer Translationsbewegung versehen ist.

7. Verflechtungsanlage nach Anspruch 6, **dadurch gekennzeichnet, dass** die Führungseinrichtungen mindestens eine Laufschiene (18) aufweisen, die in das Gestell (19) eingearbeitet ist, um fest mit den Vertikalpfosten (11a) des Verflechtungsportalrahmens (11,11') verbundene Rollenelemente (17) aufzunehmen.

8. Verflechtungsanlage nach Anspruch 1, **dadurch gekennzeichnet, dass** sie mindestens zwei Führungen (20,20') aufweist, die auf dem Verflechtungsportalrahmen (11,11') angeordnet sind, um mindestens zwei Verflechtungsbänder (12') auf mindestens zwei praktisch parallel verlaufenden Verflechtungsebenen (P) zu verteilen, die mindestens über die Länge der palettierten Produkte (2) aufgeteilt sind.

9. Verflechtungsanlage nach Anspruch 8, **dadurch gekennzeichnet, dass** mindestens eine der Führungen (20') mit Betätigungseinrichtungen (21) versehen ist, die dafür vorgesehen sind, sie in Form einer alternativen Translationsbewegung entlang des Verflechtungsportalrahmens (11') auf einer zuvor festgelegten Distanz (D) zu verlagern, um die Verflechtungsebene (P) praktisch parallel zu sich selbst zu verlagern.

10. Verflechtungsanlage nach Anspruch 9, **dadurch gekennzeichnet, dass** die Betätigungseinrichtungen (21) aus der Gruppe ausgewählt sind, die mindestens die Elektromotoren, die Hydraulik- und Pneumatikzylinder umfasst.

11. Palettierungsmaschine (1) für längliche zylindrische Produkte (2), die mindestens einen Portalrahmen (3), ein Fahrgestell (4), welches auf dem besagten Portalrahmen (3) in einer vertikalen Translationsbewegung bewegbar angebracht ist, und mindestens eine Greifvorrichtung (5) aufweist, die in Form einer horizontalen Translationsbewegung auf dem Fahrgestell (4) bewegbar angebracht und dafür vorgesehen ist, die Produkte (2) von einer Lagerungsrampe (6) zu entnehmen und sie auf einer Transportpalette (7) abzulegen, **dadurch gekennzeichnet, dass** sie mindestens eine Verflechtungsanlage (10,10') nach einem beliebigen der vorangegangenen Ansprüche umfasst.

12. Palettierungsmaschine nach Anspruch 11, **dadurch gekennzeichnet, dass** die Verflechtungsanlage (10,10') mindestens einen Verflechtungsportalrahmen (11,11') mit solchen Abmessungen aufweist, dass er sich in das Innere des Portalrahmens (3) der Palettierungsmaschine (1) unter der Greifvorrichtung (5) und außerhalb der Transportpalette (7) und der palettierten Produkte (2) integriert.

13. Palettierungsmaschine nach Anspruch 11, **dadurch gekennzeichnet, dass** die Greifvorrichtung (10,10') Rückführungseinrichtungen ihrer Antriebseinrichtungen aufweist, die mit den Rückführungseinrichtungen der Palettierungsmaschine (1) verbunden sind, um den Verflechtungsportalrahmen (11,11') alternativ von einer auf die andere Seite der Transportpalette (7) praktisch parallel zu den Verflechtungsebenen (P) in Abhängigkeit von dem Fortschritt der Palettierung von auf der Transportpalette (7) abgelegten Produkten (2) und entsprechend eines zuvor festgelegten Verschachtelungsplanes zu verlagern.

14. Palettierungsmaschine nach Anspruch 11, **dadurch gekennzeichnet, dass** mindestens eine der Führungen (20') der Verflechtungsanlage (10') mit Betätigungseinrichtungen (21) versehen ist, die dafür vorgesehen sind, sie in Form einer alternativen Translationsbewegung entlang des Verflechtungsportalrahmens (11') auf einer zuvor festgelegten Distanz (D) zu verlagern, um die Verflechtungsebene (P) praktisch parallel zu sich selbst zu verlagern.

15. Palettierungsmaschine nach den Ansprüchen 13 und 14, **dadurch gekennzeichnet, dass** die Rückführungseinrichtungen zur Steuerung der Betätigungseinrichtungen (21) der Führung (20') vorgesehen sind, so dass das Verflechtungsband (12') in Abhängigkeit von dem Fortschritt der Palettierung von Produkten (2) und von dem zuvor festgelegten Verflechtungsplan um Pfosten (7') der Transportpalette (7) herumgewickelt wird.
